# EUROPÄISCHE PATENTSCHRIFT

(11) **EP 1 000 523 B1**
(45) Veröffentlichungstag und Bekanntmachung des Hinweises auf die Patenterteilung: **31.10.2007**
(21) Anmeldenummer: 98945026.7
(22) Anmeldetag: 22.07.1998
(51) Int. Cl.: H04Q 11/04

(54) **VERFAHREN UND ANPASSUNGSEINRICHTUNG ZUM VERMITTELN VON WÄHLVERBINDUNGEN ZWISCHEN ZEITMULTIPLEXORIENTIERTEN KOMPONENTEN EINES KOMMUNIKATIONSNETZES ÜBER EIN ATM-KOMMUNIKATIONSNETZ**
METHOD AND DEVICE FOR ADAPTING THE SETTING UP OF CONNECTIONS BY SWITCHING BETWEEN A COMMUNICATION NETWORK COMPONENTS WITH TIME DIVISION MULTIPLEXING VIA AN ATM COMMUNICATION NETWORK
PROCEDE ET DISPOSITIF D'ADAPTATION POUR ETABLIR DES CONNEXIONS PAR COMMUTATION ENTRE DES COMPOSANTS A MULTIPLEXAGE DANS LE TEMPS D'UN RESEAU DE COMMUNICATION PAR L'INTERMEDIAIRE D'UN RESEAU DE COMMUNICATION ATM

(30) Priorität: 29.07.1997 DE 19732676
(43) Veröffentlichungstag der Anmeldung: 17.05.2000
(73) Patentinhaber: SIEMENS AKTIENGESELLSCHAFT, 80333 München (DE)
(72) Erfinder: FRAAS, Wolfgang, D-82515 Wolfratshausen (DE); HÜNLICH, Klaus, D-85467 Neuching (DE); PETRI, Bernhard, D-81477 München (DE)
(86) Internationale Anmeldenummer: PCT/DE1998/002059
(87) Internationale Veröffentlichungsnummer: WO 1999/007179

(56) Entgegenhaltungen:
- EP-A- 0 603 915
- GB-A- 2 297 881
- US-A- 5 463 621
- US-A- 5 490 141
- SHELEF N: "SVC SIGNALING: CALLING ALL NODES ATM SWITCHED VIRTUAL CIRCUITS REQUIRE SOME COMPLEX PROCEDURES TO ESTABLISH CONNECTIONS BETWEEN END-STATIONS" DATA COMMUNICATIONS, Bd. 24, Nr. 8, 1. Juni 1995, Seite 123/124, 126, 128, 130 XP000506589
- PATENT ABSTRACTS OF JAPAN vol. 097, no. 008, 29. August 1997 & JP 09 107359 A (NEC CORP), 22. April 1997

## Beschreibung

In bestehenden und zukünfigen zeitmultiplexorientierten Kommunikationsnetzen, insbesondere in ISDN-orientierten Kommunikationsnetzen, ist neben der Vermittlung von Wählverbindungen zwischen zeitmultiplexorientierten Kommunikationssystemen über ATM-Kommunikationsnetze auch eine Vermittlung von Wählverbindungen im Kommunikationsendgeräte-Anschlußbereich bzw. Teilnehmeranschlußbereich von Kommunikationssystemen über ATM-Kommunikationsnetze vorgesehen. Hierzu werden, wie beispielsweise in der DE 42 24 388 C1 beschrieben, permanente virtuelle Verbindungen im ATM-Kommunikationsnetz eingerichtet. In der DE 196 042 44.5 ist desweiteren vorgeschlagen, für jedes anzuschließende Kommunikationsendgerät eine permanente virtuelle Verbindung einzurichten. Durch das Einrichten von permanenten virtuellen Verbindungen werden im ATM-Kommunikationsnetz ständig die beantragten vermittlungs- und übertragungstechnischen Ressourcen - bei ISDN-Verbindungen 2 Nachrichtenkanäle a 64 kbis/s und ein Signalisierungskanal mit 16 kbit/s - bereitgestellt. Dies führt zu einer ineffizienten Ressourcennutzung im ATM-Kommunikationsnetz.

Die der Erfindung zugrundeliegende Aufgabe besteht darin, die übertragungs- und vermittlungstechnischen Ressourcen von über ATM-Kommunikationsnetzen geführten Wählverbindungen zwischen zeitmultiplexorientierten Komponenten eines Kommunikationsnetzes, insbesondere im Kommunikationsendgeräte-Anschlußbereich von Kommunikationssystemen effektiver zu nutzen. Die Aufgabe wird durch die Merkmale des Anspruchs 1 gelöst.

Der wesentliche Aspekt der erfindungsgemäßen Lösung ist darin zu sehen, daß bei einem von einer zeitmultiplexorientierten Komponente eingeleiteten Verbindungsaufbau aus einer angegebenen Zielinformation - insbesondere die Zielrufnummer - eine ATM-Kommunikationsnetz-spezifische Zielinformation - d.h. virtuelle Pfad- und Kanal abgeleitet wird und gemäß der abgeleiteten Zielinformation eine ATM-Wählverbindung im ATM-Kommunikationsnetz aufgebaut wird. Anschließend werden im Rahmen des Verbindungsauf- und -abbaus und eines Informationsaustausches zwischen den zeitmultiplexorientierten Komponenten Signalisierungs- und Nutzinformationen über die im ATM-Kommunikationsnetz aufgebaute ATM-Wählverbindung transparent übermittelt. Bei einem Verbindungsabbau zwischen den zeitmultiplexorientierten Komponenten wird die betroffene ATM-Wählverbindung im ATM-Kommunikationsnetz wieder abgebaut. Durch das Ableiten einer ATM-Kommunikationsnetz-spezifischen virtuellen Pfad- und Kanalinformation aus der Kommunikationsnetz-spezifischen Zielrufnummer und einem anschließenden automatischen Verbindungsaufbau über das ATM-Kommunikationsnetz mit der abgeleiteten virtuellen Pfad- und Kanalinformation ist eine erheblich effizientere Nutzung der vermittlungs- und übertragungstechnischen Ressourcen möglich.

Ein weiterer wesentlicher Vorteil des erfindungsgemäßen Verfahrens ist darin zu sehen, daß im Überlastfall oder bei Ausfall einer Übertragungsstrecke oder vermittlungstechnischen Komponente - z.B. eine Koppelanordnung im Anschlußbereich von Kommunikationssystemen - eine Alternativ-Route bzw. eine andere vermittlungs- und übertragungstechnische Ressource benutzt werden kann. Hierzu können mehrere ATM-Kommunikationsnetz-spezifische Zielinformationen einer Kommunikationsnetz-spezifischen Zielinformation zugeordnet werden - Anspruch 5. Durch die zusätzlichen ATM-Kommunikationsnetz-spezifischen Zielinformationen sind Alternativ-Routen bestimmt, die bei Ausfall der üblichen oder beispielsweise priorisierten Route bzw. Übertragungsstrecke verwendet werden. Dies bedeutet, daß im Störungs- bzw. Überlastfall die Wählverbindungen zwischen zeitmultiplexorientierten Komponenten über Alternativ-ATM-Wählverbindungen vermittelt werden. Die Zuordnung von ATM-Kommunikationsnetz-spezifischer zu Kommunikationsnetz-spezifischer Zielinformation ist vorgegeben bzw. ist durch entsprechende Einstellungen - beispielsweise programmtechnische Einstellungen - vorgebbar.

Gemäß einer weiteren Ausgestaltung des erfindungsgemäßen Verfahrens werden bei unmittelbar aufeinanderfolgenden Verbindungsaufbauten zwischen zeitmultiplexorientierten Komponenten des Kommunikationsnetzes (KN) die ATM-Wählverbindung gehalten - Anspruch 2. Durch diese Reduzierung des Signalisierungsverkehrs kann die dynamische Belastung des ATM- bzw. zeitmultiplexorientierten Kommunikationsnetzes reduziert werden.

Vorteilhaft erfolgt der Verbindungsauf- und -abbau sowie der Informationsaustausch gemäß dem standardisierten ISDN-Protokoll - Anspruch 3, wobei die Wählverbindungen vorteilhaft zwischen zeitmultiplexorientierten Komponenten im Kommunikationsendgeräte-Anschlußbereich von zeitmultiplexorientierten Kommunikationssystemen über ATM-Wählverbindungen vermittelt werden - Anspruch 4. Aufgrund der geringeren Verkehrswerte je angeschlossenem Kommunikationsendgerät ist der Einsatz des erfindungsgemäßen Verfahrens im Kommunikationsendgeräte-Anschlußbereich von Kommunikationssystemen am effektivsten, da durch die erfindungsgemäßen ATM-Wählverbindungen eine Nutzung von vermittlungs- und übertragungstechnischen Ressourcen durch mehrere angeschlossene Kommunikationsendgeräte und zusätzlich ein Alternativrouting der zeitmultiplexorientierten Wählverbindungen im Stör- bzw. Überlastfall erreicht wird.

Weitere vorteilhafte Ausgestaltung der Erfindung insbesondere einer Anpassungseinrichtung zur Realisierung des erfindungsgemäßen Verfahrens sind den weiteren Ansprüchen zu entnehmen.

Im folgenden wird das erfindungsgemäße Verfahren bzw. die erfindungsgemäße Anpassungseinrichtung anhand eines Blockschaltbildes näher erläutert.

Das Blockschaltbild zeigt zeitmultiplexorientierte Kommunikationsendgeräte KE.., die einem zeitmultiplexorientierten Kommunikationssystem KS - beispielsweise einem privaten Kommunikationssystem - zugeordnet sind, wobei erfindungsgemäß die Kommunikationsendgeräte KE.. jeweils an eine Anpassungseinrichtung ANP angeschlossen sind - im Blockschaltbild ist zur weiteren Erläuterung jeweils ein Kommunikationsendgerät KE und eine Anpassungseinrichtung ANP dargestellt. Der Anschluß der Kommunikationsendgeräte KE.. kann beispielsweise über einen ISDN-Basisanschluß SO oder einen ISDN-Leitungsanschluß U erfolgen. Je nach Anschlußart ist in der Anpassungseinrichtung ANP eine entsprechend realisierte Anschlußeinheit AE-ZM vorgesehen. Alternativ sind Anschlußarten wie beispielsweise analoger a/b-Anschluß oder auch drahtloser DECT-Anschluß möglich, wobei die Anschlußeinheit AE-ZM entsprechend der vorliegenden Anschlußart zu realisieren ist - physikalisch und prozedural.

Analog zum Anschluß eines Kommunikationsendgerätes KE.. ist für den Anschluß an ein ATM-Kommunikationsnetz ATM-KN eine ATM-Anschlußeinheit AE-ATM in der Anpassungseinrichtung ANP realisiert. Die ATM-Anschlußeinheit AE-ATM weist einen ATM-Kommunikationsanschluß KA, über den die Anpassungseinrichtung ANP mit dem ATM-Kommunikationsnetz ATM-KN verbunden ist. In der Anpassungseinrichtung ANP weist desweiteren eine mit der zeitmultiplexorientierten und der ATM-Anschlußeinheit AE-ZM,AE-ATM über ein Bussystem B verbundene Steuereinheit ST auf, durch die überwiegend die prozeduralen Eigenschaften der in den beiden Anschlußeinheiten AE-ZM,AE-ATM vorgesehenen Anschlüsse SO,U,KA programmtechnisch realisiert sind. Erfindungsgemäß ist in der Steuereinheit ST eine Tabelle TAB gespeichert, in der einer Ursprungsinformation - üblicherweise die Rufnummer rnr des rufenden Kommunikationsendgerätes KE.. eine ATM-Kommunikationsnetz-spezifische Zielinformation vpi,vci zugeordnet ist. Die ATM-Kommunikationsnetz-spezifische Zielinformation vpi,vci ist durch eine virtuelle Pfadinformation vpi und durch eine virtuelle Kanalinformation vci bestimmt. Die ATM-Kommunikationsnetz-spezifische Zielinformation vpi,vci ist derart vorgegeben, daß ein von dem Kommunikationsanschluß KA eingeleiteter Verbindungsaufbau zu einem vorgegebenen d.h. bestimmten weiteren Kommunikationanschluß KA' durchgeführt wird.

An diesen weiteren Kommunikationsanschluß KA' ist eine weitere, gleichartig realisierte Anpassungseinrichtung ANP' angeschlossen. Für das Ausführungsbeispiel sei angenommen, daß der Anschluß zum zeitmultiplexorientierten Kommunikationssystem KS durch eine ISDN-Leitungsanschluß U realisiert ist. Alternativ sind Anschlüsse wie ISDN-Basisanschlüsse SO, ISDN-Primäranschlüsse S2 oder die standardisierten Anschlüsse V.5 für Zubringernetze möglich, wobei die Anschlußeinheit AE-ZM in der weiteren Anpassungseinrichtung ANP entsprechend der vorliegenden Anschlußart auszugestalten ist. Die prozeduralen Eigenschaften der jeweiligen Anschlüsse KA,U,V sowie die erfindungsgemäßen Routinen sind wiederum in der Steuereinheit ST realisiert. Im Unterschied zu der Steuereinheit ST in der Anpassungseinrichtung ANP ist in der Steuereinheit ST der weiteren Anpassungseinrichtung ANP' eine Tabelle TAB vorgesehen, in der einer Zielinformation, d.h. der Rufnummer znr eines gerufenen Kommunikationsendgerätes KE.. eine ATM-Kommunikationsnetz-spezifische Zielinformation vpi,vci, d.h. eine virtuelle Pfad- und Kanalinformation vpi, vci zugeordnet ist. Durch diese virtuelle Pfad- und Kanalinformation ist der Kommunikationsanschluß KA bestimmt, an den über die jeweilige Anpassungseinrichtung ANP das durch die Rufnummer zrn des gerufenen Kommunikationsendgerätes KE.. angeschlossen ist. Dies bedeutet, daß bei einem vom Kommunikationssystem KS eingeleiteten Verbindungsaufbau entsprechend der angegebenen Zielrufnummer zrn automatisch eine ATM-Wählverbindung SVC zu dem Kommunikationsanschluß KA aufgebaut wird, an den das durch die Zielrufnummer zrn bestimmte Kommunikationsendgerät KE.. angeschlossen ist.

Im unteren Bereich des Blockschaltbildes ist ein Ablaufdiagramm angedeutet, mit dessen Hilfe das erfindungsgemäße Verfahren erläutert wird. Bei einem vom dargestellten Kommunikationsendgerät KE eingeleiteten Verbindungsaufbau SETUP WV (si) über den ISDN-Leitungsanschluß U wird in der Anpassungseinrichtung ANP mit Hilfe der Tabelle TAB automatisch aus der in den Signalsierungsinformationen si angegebenen Rufnummern rnr - insbesondere aus der Rufnummer rnr des rufenden Kommunikationsendgerätes KE - eine ATM-Kommunikationsnetz-spezifische virtuelle Pfad- und Kanalinformation vpi,vci abgeleitet. Mit Hilfe der abgeleiteten virtuellen Pfad- und Kanalinformation vpi, vci wird eine ATM-Wählverbindung SVC zu dem Kommunikationsanschluß KA aufgebaut, an den die zugehörige, weitere Anpassungseinrichtung ANP' angeschlossen ist. Über die aufgebaute ATM-Wählverbindung SVC werden anschließend Signalisierungsinformationen si für den weiteren Verbindungsaufbau SETUP WV (si) mit dem Kommunikationssystem KS übermittelt. Nach abgeschlossenem Verbindungsaufbau SETUP WV (si) in Richtung Kommunikationsendgerät KE werden ISDN-gemäß Nutz- und Signalisierungsinformationen ni,si - beispielsweise digitalisierte Sprachinformationen und Signalisierungsinformationen für die Leistungsmerkmalssteuerung - während einer bestehenden Wählverbindung WV übermittelt.

Nach der Informationsübermittlung wird durch das Kommunikationsendgerät KE die Wählverbindung WV durch eine entsprechende ISDN-Signalsierung RELEASE WV ausgelöst und bis zum Kommunikationssystem KS - bzw. zum gerufenen Kommunikationsendgerät KE - nicht dargestellt - abgebaut. Daraufhin wird die ATM-Wählverbindung SVC ebenfalls abgebaut. Die durch die ATM-Wählverbindung SVC gebundenen vermittlungs- und übertragungstechnischen Ressourcen des ATM-Kommunikationsnetz ATM-KN werden hierdurch freigegeben und stehen für weitere Kommunikationsbeziehungen zwischen den über das ATM-Kommunikationsnetz ATM-KN angeschlossenen Kommunikationsendgeräten KE.. zur Verfügung. Durch dieses temporäre Binden von vermittlungs- und übertragungstechnischen Ressourcen für die Dauer einer zeitmultiplexorientierten Wählverbindung WV können die vermittlungs- und übertragungstechnischen Ressourcen des ATM-Kommunikationsnetzes erheblich effektiver genutzt werden.

Bei vom Kommunikationssystem KS zu einem Kommunikationsendgerät KE eingeleiteten Verbindungsaufbauten - nicht dargestellt - werden die ATM-Kommunikationsnetz-spezifischen virtuellen Pfad- und Kanalinformationen vpi, vci aus den in den Signalisierungsinformationen si angegebenen Zielrufnummern zrn abgeleitet und eine ATM-Wählverbindung SVC entsprechend der abgeleiteten virtuellen Pfad- und Kanalinformationen vpi,vci aufgebaut, wobei durch die abgeleiteten virtuellen Pfad- und Kanalinformationen vpi,vci der Kommunikationsanschluß KA des ATM-Kommunikationsnetzes ATM-KN bestimmt ist, an den das durch die angegebene Zielrufnummer zrn bestimmte Kommunikationsendgerät KE angeschlossen ist. Die Ableitung der virtuellen Pfad- und Kanalinformationen vpi,vci erfolgt mit Hilfe der in der weiteren Anpassungseinrichtung ANP' implementierten Tabelle TAB.

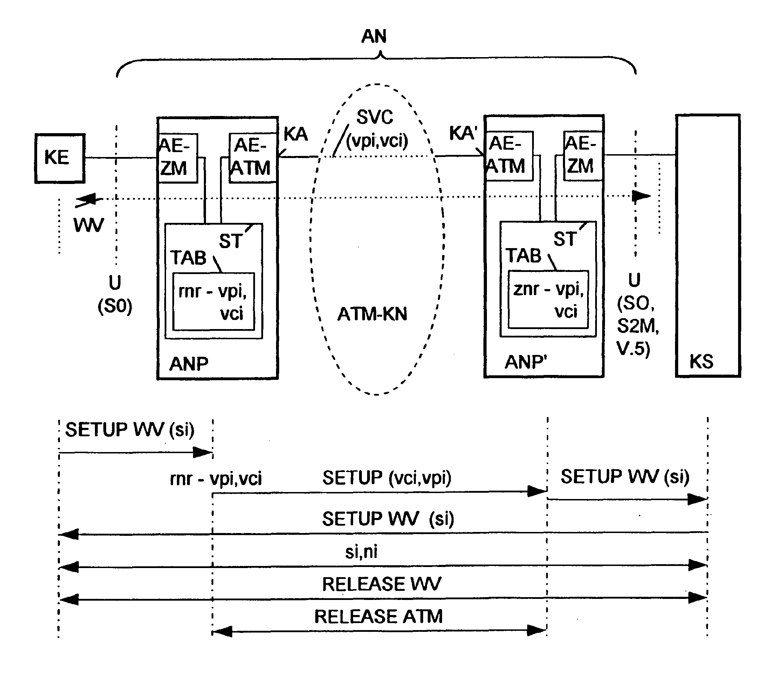

## Patentansprüche

1. Verfahren zum Vermitteln von Wählverbindungen (WV) zwischen zeitmultiplexorientierten Komponenten (KE,KS) eines Kommunikationsnetzes (KN) über ein ATM-Kommunikationsnetz (ATM-KN),
- bei dem bei einem von einer zeitmultiplexorientierten Komponente (KE,KS) eingeleiteten Verbindungsaufbau (SETUP) aus einer angegebenen Signalisierungsinformation (rnr,znr) eine ATM-Kommunikationsnetz-spezifische Zielinformation (vpi,vci) abgeleitet wird,
- bei dem gemäß der abgeleiteten Zielinformation (vpi,vci) automatisch eine ATM-Wählverbindung (SVC) im ATM-Kommunikationsnetz (ATM-KN) aufgebaut wird,
- bei dem im Rahmen des Verbindungsaufbaus (SETUP) und eines Informationsaustausches zwischen den zeitmultiplexorientierten Komponenten (KE,KS) Signalisierungs- und Nutzinformationen (si,ni) über die im ATM-Kommunikationsnetz (ATM-KN) aufgebaute ATM-Wählverbindung (SVC) transparent übermittelt werden, und
- bei dem bei einem Verbindungsabbau (RELEASE) zwischen den zeitmultiplexorientierten Komponenten (KE,KS) die betroffene ATM-Wählverbindung (SVC) im ATM-Kommunikationsnetz (ATM-KN) abgebaut wird.

2. Verfahren nach Anspruch 1, **dadurch gekennzeichnet,**
**daß** bei aufeinanderfolgenden Verbindungsaufbauten (SETUP) zwischen zeitmultiplexorientierten Komponenten (KE,KS) des Kommunikationsnetzes (KN) die ATM-Wählverbindung (SVC) gehalten wird.

3. Verfahren nach Anspruch 1, **dadurch gekennzeichnet,**
**daß** der Verbindungsauf- und -abbau (SETUP,RELEASE) sowie der Informationsaustausch gemäß dem standardisierten ISDN-Protokoll erfolgt.

4. Verfahren nach einem der vorhergehenden Ansprüche, **dadurch gekennzeichnet,**
**daß** die zeitmultiplexorientierten Komponenten (KE,KS) im Kommunikationsendgeräte-Anschlußbereich (AN) von zeitmultiplexorientierten Kommunikationssystemen (KS) realisiert sind.

5. Verfahren nach einem der vorhergehenden Ansprüche, **dadurch gekennzeichnet,**
**daß** die Beziehung von Kommunikationsnetz-spezifischer Signalisierungsinformation (si) und ATM-Kommunikationsnetz-spezifischer Zielinformation (vpi,vci) vorgegeben ist, wobei im Sinne einer übergeordneten Vertnittlungsstrategie einer Kommunikationsnetz-spezifischen Zielinformation (rnr,znr) mehrere ATM-Kommunikationsnetz-spezifischen Zielinformation (vpi,vci) zuordenbar sind.

6. Verfahren nach einem der vorhergehenden Ansprüche, **dadurch gekennzeichnet,**
**daß** bei einem Vermitteln von Wählverbindungen (WV) im Kommunikationsendgerät-Anschlußbereich (AN) von zeitmultiplexorientierten Kommunikationssystemen (KS)
- bei einem von einem Kommunikationsendgerät KE eingeleiteten Verbindungsaufbau (SETUP) die angegebene Signalsierungsinformation (si) durch eine das rufende Kommunikationsendgerät (KE) anzeigende Rufnummer (rnr) und
- bei einem durch durch das Kommunikationssystem (KS) eingeleiteten Verbindungsaufbau (SETUP) die angegebene Signalsierungsinformation (si) durch die Rufnummer (zrn) des gerufenen Kommunikationsendgerätes (KE) repräsentiert ist.

7. Verfahren nach Anspruch 6, **dadurch gekennzeichnet,**
**daß** die ATM-Kommunikationsnetz-spezifische Zielinformation (vpi, vci)
- bei einem vom Kommunikationsendgerät (KE) eingeleiteten Verbindungsaufbau (SETUP) aus der Rufnummer (rnr) des gerufenen Kommunikationsendgerätes (KE) und
- bei einem vom Kommunikationssystem (KS) eingeleiteten Verbindungsaufbau aus der Rufnummer (zrn) des gerufenen Kommunikationsendgerätes (KE) abgeleitet wird.

8. Anpassungseinrichtung zum Vermitteln von Wählverbindungen (WV) zwischen zeitmultiplexorientierten Komponenten (KE,KS) eines Kommunikationsnetzes (KN) über ein ATM-Kommunikationsnetz (ATM-KN),
- mit jeweils einer Anschalteeinheit (AE-ATM, AE-KN) zum Anschluß an das Kommunikationsnetz (KN) und an das ATM-Kommunikationsnetz (ATM-KN), und
- mit einer programmgesteuerten Steuereinheit (ST), die
-- mit einer Auswerteroutine (AR) zum Ableiten einer ATM-Kommunikationsnetz-spezifischen Zielinformation (vpi,vci) aus einer bei einem von einer zeitmultiplexorientierten Komponente eingeleiteten Verbindungsaufbau angegebenen Zielinformation (rn),
-- mit einer Signalisierungsroutine (SR) zum Aufbau einer ATM-Wählverbindung (SVC) gemäß der abgeleiteten Zielinformation (vpi,vci) im ATM-Kommunikationsnetz (ATM-KN),
-- mit Übertragungsmitteln zum transparenten Übermitteln von Signalisierungs- und Nutzinformationen (si,ni) über die im ATM-Kommunikationsnetz (ATM-KN) aufgebaute ATM-Wählverbindung (SVC) im Rahmen des Verbindungsauf- und -abbaus und eines Informationsaustausches zwischen den zeitmultiplexorientierten Komponenten, und
-- mit einer Signalisierungsroutine (SR) zum Abbau der ATM-Wählverbindung (SVC) bei einem Verbindungsabbau zwischen den zeitmultiplexorientierten Komponenten ausgestattet ist.

## Claims

1. Method for switching switched connections (WV) between time-division-multiplex-oriented components (KE, KS) of a communications network (KN) over an ATM communications network (ATM-KN),
- in which, in the case of a connection setup (SETUP) initiated by a time-division-multiplex-oriented component (KE, KS), an ATM-communications-network-specific destination information item (vpi,vci) is derived from a specified signalling information item (rnr,znr),
- in which an ATM-switched connection (SVC) is automatically set up in the ATM communications network (SVC) on the basis of the derived destination information (vpi,vci),
- in which, during the connection setup (SETUP) and information exchange between the time-division-multiplex-oriented components (KE,KS), signalling and user information (si,ni) is transmitted transparently via the ATM-switched connection (SVC) set up in the ATM communications network (ATM-KN), and
- in which, when a connection is released (RELEASE) between the time-division-multiplex-oriented components (KE,KS), the respective ATM-switched connection (SVC) is released in the ATM communications network (ATM-KN).

2. Method according to claim 1, **characterized in that** the ATM-switched connection (SVC) is held in the case of successive connection setups (SETUP) between time-division-multiplex-oriented components (KE,KS) of the communications network (KN).

3. Method according to claim 1, **characterized in that** the connection setup and release (SETUP,RELEASE) as well as the information exchange are carried out on the basis of the standardized ISDN protocol.

4. Method according to one of the preceding claims,
**characterized in that** the time-division-multiplex-oriented components (KE,KS) in the subscriber loop (AN) are implemented by time-division-multiplex-oriented communications systems (KS).

5. Method according to one of the preceding claims,
**characterized in that**
the relationship between communications-network-specific signalling information (si) and ATM-communications-network-specific destination information (vpi,vci) is predefined, it being possible for the purposes of an overarching switching strategy to assign a plurality of ATM-communications-network-specific destination information items (vpi,vci) to a communications-network-specific destination information item (rnr, znr).

6. Method according to one of the preceding claims,
**characterized in that**
during switching of switched connections (WV) in the subscriber loop (AN) of time-division-multiplex-oriented communications systems (KS)
- the specified signalling information (si) is represented by a call number (rnr) indicating the calling communications terminal (KE) in the case of a connection setup (SETUP) initiated by a communications terminal KE, and
- the specified signalling information (si) is represented by the call number (zrn) of the called communications terminal (KS) in the case of a connection setup (SETUP) initiated by the communications system KS.

7. Method according to claim 6, **characterized in that** the ATM-communications-network-specific destination information (vpi,vci)
- is derived from the call number (rnr) of the called communications terminal (KE) in the case of a connection setup (SETUP) initiated by the communications terminal KE, and
- is derived from the call number (zrn) of the called communications terminal (KE) in the case of a connection setup initiated by the communications system KS.

8. Adapter device for switching switched connections (WV) between time-division-multiplex-oriented components (KE,KS) of a communications network (KN) over an ATM communications network (ATM-KN),
- having in each case an access unit (AE-ATM, AE-KN) for connecting to the communications network (KN) and to the ATM communications network (ATM-KN), and
- having a program-controlled control unit (ST), which is equipped with
-- an evaluation routine (AR) for deriving an ATM-communications-network-specific destination information item (vpi,vci) from a signalling information item (rn) specified during a connection setup initiated by a time-division-multiplex-oriented component,
-- a signalling routine (SR) for setting up an ATM-switched connection (SVC) in the ATM communications network (ATM-KN) on the basis of the derived destination information (vpi,vci),
-- transmission means for the transparent transmission of signalling and user information (si,ni) via the ATM-switched connection (SVC) set up in the ATM communications network (ATM-KN) during the connection setup and release and information exchange between the time-division-multiplex-oriented components, and
-- a signalling routine (SR) for releasing the ATM-switched connection (SVC) when a connection between the time-division-multiplex-oriented components is released.

## Revendications

1. Procédé pour commuter des connexions commutées (WV) entre des composants (KE, KS) orientés multiplexage temporel d'un réseau de communication (KN) au moyen d'un réseau de communication de ATM (ATM-KN),
- dans lequel, lors de l'établissement de connexion (SETUP) amorcé par un composant (KE, KS) orienté multiplexage temporel, une information cible (vpi, vci) spécifique au réseau de communication de ATM est déduite d'une information de signalisation (rnr, znr) indiquée,
- dans lequel une connexion commutée de ATM (SVC) est établie automatiquement dans le réseau de communication de ATM (ATM-KN) selon l'information cible déduite (vpi, vci),
- dans lequel, dans le cadre de l'établissement de connexion (SETUP) et d'un échange d'information entre les composants (KE, KS) orientés multiplexage temporel, des informations de signalisation et des informations utiles (si, ni) sont transmises de façon transparente par la connexion commutée de ATM (SVC) établie dans le réseau de communication de ATM (ATM-KN), et
- dans lequel, lors d'une coupure de connexion (RELEASE) entre les composants (KE, KS) orientés multiplexage temporel, la connexion commutée de ATM concernée (SVC) est coupée dans le réseau de communication de ATM (ATM-KN).

2. Procédé selon la revendication 1, **caractérisé en ce que**
la connexion commutée de ATM (SVC) est maintenue en cas d'établissements de connexion consécutifs (SETUP) entre des composants (KE, KS) orientés multiplexage temporel du réseau de communication (KN).

3. Procédé selon la revendication 1, **caractérisé en ce que**
l'établissement et la coupure de la connexion (SETUP, RELEASE) ainsi que l'échange d'informations s'effectuent selon le protocole de ISDN standardisé.

4. Procédé selon l'une quelconque des revendications précédentes, **caractérisé en ce que**
les composants (KE, KS) orientés multiplexage temporel sont réalisés dans la zone de raccordement des terminaux de communication (AN) par des systèmes de communication (KS) orientés multiplexage temporel.

5. Procédé selon l'une quelconque des revendications précédentes, **caractérisé en ce que**
la relation entre l'information de signalisation (si) spécifique au réseau de communication et l'information cible (vpi, vci) spécifique au réseau de communication de ATM est prédéfinie, plusieurs informations cibles (vpi, vci) spécifiques au réseau de communication de ATM pouvant être attribuées à une information cible (rnr, znr) spécifique au réseau de communication dans le sens d'une stratégie de commutation prioritaire.

6. Procédé selon l'une quelconque des revendications précédentes, **caractérisé en ce que**
lors d'une commutation de connexions commutées (WV) dans la zone de raccordement du terminal de communication (AN) de systèmes de communication (KS) orientés multiplexage temporel
- lors d'un établissement de connexion (SETUP) amorcé par un terminal de communication (KE), l'information de signalisation (si) indiquée est représentée par un numéro d'appel (rnr) indiquant le terminal de communication (KE) appelant et
- lors d'un établissement de connexion (SETUP) amorcé par le système de communication (KS), l'information de signalisation (si) indiquée est représentée par le numéro d'appel (znr) du terminal de communication (KE) appelé.

7. Procédé selon la revendication 6, **caractérisé en ce que**
l'information cible (vpi, vci) spécifique au réseau de communication de ATM
- est déduite du numéro d'appel (rnr) du terminal de communication (KE) appelé dans le cas d'un établissement de connexion (SETUP) amorcé par le terminal de communication (KE) et
- est déduite du numéro d'appel (zrn) du terminal de communication (KE) appelé dans le cas d'un établissement de connexion amorcé par le système de communication (KS).

8. Dispositif d'adaptation pour la commutation de connexions commutées (WV) entre des composants (KE, KS) orientés multiplexage temporel d'un réseau de communication (KN) au moyen d'un réseau de communication de ATM (ATM-KN),
- comprenant respectivement une unité de rattachement (AE-ATM, AE-KN) pour le raccordement au réseau de communication (KN) et au réseau de communication de ATM (ATM-KN), et
- comprenant une unité de commande (ST) commandée par programme, qui est équipée
-- d'une routine d'analyse (AR) pour la déduction d'une information cible (vpi, vci) spécifique au réseau de communication de ATM à partir d'une information cible (rn) indiquée lors d'un établissement de connexion amorcé par un composant orienté multiplexage temporel,
-- d'une routine de signalisation (SR) pour l'établissement d'une connexion commutée de ATM (SVC) selon l'information cible (vpi, vci) déduite dans le réseau de communication de ATM (ATM-KN),
-- de moyens de transmission pour la transmission transparente d'informations de signalisation et d'informations utiles (si, ni) par la connexion commutée de ATM (SVC) établie dans le réseau de communication de ATM (ATM-KN) dans le cadre de l'établissement et de la coupure de la connexion et d'un échange d'informations entre les composants orientés multiplexage temporel et,
-- d'une routine de signalisation (SR) pour l'établissement de la connexion commutée de ATM (SVC) lors d'un établissement de connexion entre les composants orientés multiplexage temporel.
